(19) Europäisches Patentamt

European Patent Office

Office européen des brevets

(11) **EP 2 367 863 B1**

(12) **EUROPEAN PATENT SPECIFICATION**

(45) Date of publication and mention
of the grant of the patent:
**17.10.2012 Bulletin 2012/42**

(51) Int Cl.:
**C08F 210/02** *(2006.01)*       **C08F 210/16** *(2006.01)*
**C08F 4/69** *(2006.01)*

(21) Application number: **09760778.2**

(22) Date of filing: **01.12.2009**

(86) International application number:
**PCT/EP2009/008546**

(87) International publication number:
**WO 2010/063445 (10.06.2010 Gazette 2010/23)**

(54) **POLYETHYLENE FOR THE PRODUCTION OF INTERMEDIATE BULK CONTAINERS**

POLYETHYLEN ZUR HERSTELLUNG VON GROSSPACKMITTELN

POLYÉTHYLÈNE POUR LA FABRICATION DE GROS CONTENANTS INTERMÉDIAIRES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.12.2008 EP 08021038**

(43) Date of publication of application:
**28.09.2011 Bulletin 2011/39**

(73) Proprietor: **Saudi Basic Industries Corporation
Riyadh 11422 (SA)**

(72) Inventors:
• **NOOIJEN, Godefridus, Arnoldus, Henricus**
**NL-6160 GA Geleen (NL)**
• **MARTENS, Johannes, Peter, Antonius**
**NL-6160 GA Geleen (NL)**
• **REIJNTJENS, Ron**
**NL-6160 GA Geleen (NL)**
• **GROENEBOOM, Robert, Har,**
**NL-6160 GA Geleen (NL)**
• **VAN KESSEL, Matthijs**
**NL-6160 GA Geleen (NL)**

(74) Representative: **Terpsma, Jelle Philip
SABIC Intellectual Property Group
P.O. Box 3008
6160 GA Geleen (NL)**

(56) References cited:
**WO-A1-01/34661       WO-A1-2005/054315**

• **KURELEC L ET AL: "Strain hardening modulus
as a measure of environmental stress crack
resistance of high density polyethylene"**
POLYMER 20050728 ELSEVIER LTD GB, vol. 46,
no. 17, 28 July 2005 (2005-07-28) , pages
6369-6379, XP002527237 cited in the application

**Description**

The present invention relates to polyethylene suitable for the production of intermediate bulk containers.

The production processes of the polyethylenes LDPE, HDPE and LLDPE are summarised in "Handbook of Polyethylene" by Andrew Peacock (2000; Dekker; ISBN 0824795466) at pages 43-66. The catalysts can be divided in three different subclasses including Ziegler Natta catalysts, Phillips catalysts and single site catalysts.

EP1204523B discloses the production of containers by blow moulding of for example high density polyethylene (HDPE).In the production of containers using polymer materials, a variety of moulding techniques may be used, in particular blow moulding, injection moulding and rotational moulding. For medium to large sized containers between for example 1 and 1000 litres volume blow moulding is commonly used and for very large containers, for example for use as oil or water tanks, rotational moulding can also be used. Generally in the blow moulding of containers a heated parison or extrudate is expanded to contact the interior surface of a mould by the action of pressurized gas within the parison and/or by application of a partial vacuum within the mould, for example by use of a mould having within its surface gas outlet vents through which a partial vacuum may be applied. For blow moulding to be successful, the heated polymer must be able to stretch smoothly to produce a satisfactorily uniform skin in contact with the mould surface. In the production of containers larger than 5 litres and intended for the use of dangerous goods by blow moulding generally a high molecular weight HDPE with a melt flow rate (MFR$_{21}$) in the range up to 12 g/10 min. may be applied. The choice of such materials essentially represents a compromise between the properties of the polymer, in particular the processability properties required for the blow moulding to be performed efficiently and successfully and the mechanical and chemical properties required for the end uses of the blow moulded containers such as for example impact resistance, stiffness and environmental stress crack resistance (ESCR).

HDPE is used to manufacture different types of industrial transit packaging such as large industrial open head drums, tight head drums, jerry cans, fuel tanks and intermediate bulk containers (IBC). The different types of storage and transit containers require different types of HDPE as the basic polymer because each type of industrial storage container requires an unique balance of impact resistance and ESCR properties and good processability properties.

In the development and the selection of the polymer there is typically a trade off between characteristics such as resistance to slow crack growth (measured for example by ESCR), stiffness (measured for example by density) impact resistance (measured for example by Izod), chemical resistance and processability or more specifically ease of extrusion (measured for example by melt index). Typically the higher the molecular weight of polyethylene the higher the impact resistance and ESCR. However, increasing the molecular weight will decrease processability and make extrusion more difficult.

The end user and the governmental regulations require that the container meet certain minimum requirements, such as for example for impact resistance, top load, ESCR, chemical resistance, food approval and UN approval. Furthermore the producer of the containers expects ease of processability and material consistency. Depending on the end use, there may be even more specific requirements of the material. For instance, in the case of large drums and IBC manufactured by blow moulding, a high melt strength is generally desired, as the parison produced in the blow moulding process typically must maintain its integrity for longer periods of time as the object made gets larger. Each blow moulding application requires specific properties of the HDPE grades. For example, for food packaging organoleptic properties are important whereas environmental stress crack resistance and stiffness are important for detergent and cleaner applications. Industrial containers require chemical resistance and impact strength, especially when the containers are filled with products classified as dangerous goods under the UN recommendations. These recommendations recognise several types of packaging that can be used for the transport of dangerous goods:

- Packages up to 400 kg or 450 l: for example jerrycans, drums and fuel tanks,
- Composite packages, inner and outer package fitting together: for example bag-in-box,
- IBC's up to 3m$^3$: for example flexible IBC, full plastic, composite steel outer cage with plastic inner receptacle.
- Large packaging: from 400 kg or 450 l up to 3m$^3$, for example pallet-box.

Plastic blow moulded IBC's or composite IBC's are multi-purpose, used both to transport and store products. They are widely used to transport liquids and viscous products, but also for pastes and powders. IBC's are available in a range of sizes from 500 to 1,500 litres wherein the 1,000-litre size accounts for the majority of demand. An IBC comprises four broad elements - bottle, cage (steel frame), parts (taps, valves, screw caps, gaskets, seals, corner inserts) and pallet (plastic, steel or wood). An IBC is used for transport and storage of fluids and bulk materials. The construction of the IBC and the materials used are chosen depending on the application, i.e. there are various types available in the market such as for example foldable IBC, plastic composite IBC and (stainless) steel IBC's. There are many advantages of the IBC concept because they are generally cubic in form and therefore can transport more material in the same area than cylindrically shaped containers and far more than might be shipped in the same space if packaged in consumer quantities. They rely on plastic liners that can be filled and discharged with a variety of systems. The manufacturer of a product can bulk package a product in one country and ship to many other countries at a reasonably low cost where it is subsequently packaged in final consumer form in accordance with the regulations of that country and in a form and language suitable for that country. The length and width of an IBC is usually dependent on the country's pallet dimension standard. IBC's may have pallet-like bases so that forklifts can move them. IBC in almost all cases can be stacked vertically.

The focus for polymer development within this IBC market is to obtain an excellent processability and down gauging while maintaining a good balance in impact and ESCR properties.

It is the object of the present invention to provide high density polyethylene grades to be used in the production of intermediate bulk containers especially plastic composite IBC's having an excellent balanced combination of processing properties, surface quality, welding quality, stiffness, ESCR and impact properties while maintaining the other desired properties.

The ethylene polymer according to the present invention is a HDPE having:

- a high-load melt index (HLMI) $\geq$ 3 g/10 min and $\leq$10 g/10 min (according to ISO 1133)
- Mw/Mn $\geq$ 14 and $\leq$ 25 (according to size exclusion chromatography (SEC) measurement)
- a density $\geq$ 945 kg/m$^3$ and $\leq$ 955 kg/m$^3$ (according to ISO1183) and
- an Izod impact strength (-30°C) $\geq$ 10 kJ/m$^2$ and $\leq$ 50 kJ/m$^2$ (according to ISO 180/A).

Preferably, the strain hardening modulus of the HDPE $\geq$ 20 and $\leq$ 40 (according to the method as described in Elsevier, Polymer 46(2005) 6369-6379)

Said testing methods are described in the Examples.

HDPE according to the invention results in intermediate bulk containers having an excellent processability. Furthermore an excellent balance of ESCR and impact properties is obtained.

A further advantage is the combination of properties and the reduction of system costs such as for example down gauging and cycle time reduction in the production of the IBC.

Preferably HLMI $\geq$ 4 g/10 min and $\leq$ 9 g/10 min.

More preferably HLMI $\geq$ 6 g/10 min and $\leq$ 8 g/10 min.

Preferably $M_w / M_n \geq$ 15 and $\leq$ 24.

Preferably the density $\geq$ 947 and $\leq$ 954 kg/m$^3$.

More preferably the density $\geq$ 949 kg/m$^3$.

Preferably the strain hardening modulus $\geq$ 22 MPa.

Preferably the Izod impact strength (-30°C) $\geq$ 14 kJ/m$^2$.

Preferably the die swell at 1600 s$^{-1}$ $\leq$ 5 (according to ISO 11443).

The higher broadness in molecular weight distribution (MWD) of high density polyethylene is beneficial in processing (more shear thinning behaviour) of the intermediate bulk containers but significantly decreases the impact properties. Higher density of the high density polyethylene results in a higher stiffness what is beneficial for down gauging of the products. However, higher density means less incorporation of comonomer in the HDPE resulting in significantly lower ESCR properties. An essential feature of the present invention is that a high density polyethylene, to be applied in the intermediate bulk container market, is developed which is broad in molecular weight distribution, which has a high density for excellent processability and down gauging of the materials and which has also an excellent balance in ESCR and impact properties.

The polymerization process for the preparation of the ethylene copolymers according to the invention takes place by polymerizing ethylene and! at least one olefin comonomer having between three and ten carbon atoms per molecule in the presence of a silica-supported chromium-containing catalyst that does not contain titanium and an alkyl boron compound wherein the concentration of boron, based on the diluent, is less than 0.20 ppm.

Suitable comonomers include for example propylene, 1-butene, 1-pentene, 4-methyl-1-pentene, 1-hexene and/or 1-octene. The amount of comonomer depends on the density of the polymer to be produced.

The preferred comonomer is 1-hexene.

The silica may have a surface area (SA) larger than 200 m$^2$/g and a pore volume (PV) larger than 0.8 cm$^3$/g.

Preferably, the silica-supported chromium-containing catalyst is an unmodified silica-supported chromium catalyst having a pore volume larger than 2.0 cm$^3$/g and the specific surface area is at least 450 m$^2$/g. More preferably the specific surface area is more than 500 m$^2$/g.

Preferably the silica-supported chromium catalyst is a silica-supported chromium-containing catalyst that does not contain titanium, aluminium, phosphorus, boron or fluor.

The properties of the catalyst, pore volume and specific surface area are determined before the catalyst is activated at an elevated temperature.

The amount of chromium in the catalyst is generally at least 0.5 % by weight.

Preferably the amount of chromium in the catalyst is at least 1.0 wt%.

According to a preferred embodiment of the invention the average particle size (D$_{50}$) of the catalyst is between 25 and 150 micrometers.

Generally, the catalyst is activated before being applied in the polymerization reaction. The activation may take place under different conditions. The activation generally takes place at an elevated temperature, for example, at a temperature above 450°C. The activation may take place in different atmospheres, for example in dry air.

Preferably, the activation takes place at least partially under an inert atmosphere preferably consisting of nitrogen. At the same time the temperature is raised slowly. It has been found to be advantageous to change from the nitrogen atmosphere to an atmosphere of dry air at a temperature of at most 700°C. The activation time after reaching the maximum temperature may last for several minutes to several hours. Preferably this activation time is at least 1 hour but it may be advantageous to activate much longer.

The promoter is an alkyl containing promoter.

Preferably the alkyl containing promoter is an alkyl boron compound.

More preferably, the alkyl boron compound is triethyl boron.

More preferably, the concentration of boron is less than 0.15 ppm of boron.

Preferably, the polymerization of ethylene takes place in a diluent at a temperature of between 90°C and 110°C.

Suitable diluents include, for example, isobutane and propane.

The polymerisation takes place in a single reactor.

The polymerization may be performed via a gas-phase process or via a slurry process.

According to a preferred embodiment of the invention the reactor is a slurry loop reactor.

According to a further preferred embodiment of the invention the ethylene copolymer is obtained by polymerising ethylene and 1-hexene in a slurry loop reactor in the presence of a silica-supported chromium containing catalyst and triethyl boron wherein the silica-supported chromium-containing catalyst is a silica-supported chromium catalyst having a pore volume larger than 2.0 $cm^3$ /g and a specific surface area of at least 450 $m^2$/gram and wherein the amount of chromium in the catalyst is at least 0.5 % by weight and wherein the concentration of boron is less than 0.20 ppm.

The ethylene copolymers according to the invention may be combined with additives such as for example lubricants, fillers, stabilizers, antioxidants, compatibilizers and pigments. The additives used to stabilize the copolymers may be, for example, additive packages including hindered phenols, phosphites, UV stabilisers, antistatics and stearates.

An anti static agent can be used to suppress fouling of the reactor wall. Suitable anti static agents are disclosed for instance in US4182810 and EP107127. Also for example STATSAFE™ (from Innospec Active Chemicals) can be used as anti static agent.

Preferably HDPE according to the invention is pelletized HDPE. The pelletized polymers are obtained after the extrusion step whereas the reactor powder is the product obtained as powder from the reactor.

The ethylene polymers according to the present invention are also suitable to be applied in the specific market segment of fuel tanks which may be produced via for example technical blow moulding.

WO 2005/054315 discloses an ethylene copolymer having a density higher than 940 $kg/m^3$ ,an ESCR higher than 100 hours, a high-load melt index (HLMI) lower than 30 g/10 min., a die swell at 1600 $s^{-1}$ lower than 4.00 and $M_w$ / $M_n$ of at least 28 whereas in the present invention $M_w$ / $M_n$ ranges between 14 and 25. The polymerization process takes place in the presence of an alkyl-containing promoter in an amount of at least 0.25 ppm of boron based on the diluent whereas in the process according to the present invention the concentration is less than 0.20 ppm of boron. The lower boron concentration during the polymerisation process according to the present invention results in a lower MWD than the MWD as disclosed in WO 2005/054315. The $M_w$ / $M_n$ range between 14 and 25 is very advantageous to obtain the required impact properties which are very important for the end properties of the intermediate bulk containers. A copolymer having $M_w$ / $M_n$ of at least 28 is unsuitable to be applied in the specific technical field of IBC. Consequently WO 2005/054315 does not disclose the specific use of the polyethylene during the production of intermediate bulk containers.

WO 01/34661 discloses a polymerisation process for ethylene in the presence of a catalyst system comprising chromium supported on a silica-titania support. The support must contain titanium which is in contrast with the process according to the present invention wherein the polymerisation takes place in the presence of a silica-supported chromium-containing catalyst that does not contain titanium. The presence of both titanium and alkyl boron in the polymerisation mixture results in low molecular weight waxes which have a negative influence on the impact and other properties of the container. The products obtained with the process according to WO 01/34661 are developed to be applied in the production of bottles. The products obtained with the process according to WO 01/34661 are unsuitable to be applied in the specific technical field of IBC because of the insufficient impact. Consequently WO 01/34661 does not disclose the use of the polyethylene during the production of intermediate bulk containers.

The invention will be elucidated by means of the following nonlimiting examples.

Examples

The characteristics of polyethylene obtained in the examples were determined as follows:

- The high-load melt index (HLMI) of polyethylene was measured according to ISO 1133 on pellets at 190°C with a test weight of 21.6 kg.
- The density of polyethylene was measured according to ISO 1183 (with additional annealing step) (30 minutes boiling and cooling in water).

- The strain hardening modulus is a measure of environmental stress crack resistance of high density polyethylene. The strain hardening modulus of polyethylene was measured by the method as described by Kurelec et al.in Elsevier, Polymer 46 (2005) p. 6369-6379. ESCR measurements by testing specimen in a non-ionic surfactant environment at elevated temperatures until failure is a test method which is accepted by the blow moulding market for decades. Main disadvantages of this method are the long time before failures occurs and the relative high deviation in reproducibility. A more elegant test method which overcomes these disadvantages is the ESCR method according to a standard tensile test in which the strain hardening modulus is calculated from the true-stress true-strain (TS-TS) curve. The strain hardening modulus is an intrinsic material property in which no surfactant is needed for accelerated failure times. It has been proven by L.Kurelec et al in said article that the strain hardening modulus perfectly correlates with the ESCR data as obtained by the surfactant environment method. In Table 2 (p. 6375) the ESCR and strain hardening modulus (< Gp>) data of some Cr HDPE grades and bimodal HDPE grades (both with $C_4$ and $C_6$ as co-monomers) are collected and plotted against each other (Figure 10, p. 6377). It shows a very well correlation (Rsquare=0.90) in a strain hardening modulus range between 10 and 35 MPa. The test method as described can easily be carried out by any person skilled in the art. The sample preparation and the measurements are described in Chapters 2.3.1.and 2.3.2. The observed correlation (Figure 10) is based on tensile measurements at T=80°C. The strain hardening modulus < Gp> can be calculated as given in Chapter 2.3.3. (data treatment) of the article.

- The polydispersity of polyethylene is defined as $M_w/M_n$. $M_w$ and $M_n$ were determined by size exclusion chromatography (SEC) measurement. See pages 242-244 of "Handbook of Polyethylene, structure, properties and applications "(by Andrew Peacock, Dekker, New York, 2000).

- The die swell of polyethylene was measured according to ISO 11443. The measurements were performed at a rate of 1600 s$^{-1}$. Each measurement was repeated six times. For die swell calculations the following formulae was used:

Swell ratio is defined as follows:

$$SR = \frac{\left( \frac{\sum D_{extrudate}}{n} \right)}{D_{capillary}}$$

wherein

SR = swell ratio
$D_{extrudate}$ = diameter of extrudate right below the die streng [mm]
$D_{capillary}$ = diameter of capillary [1.00 mm]
n = number of experiments

The die swell is further calculated using the formula: Die swell = $(SR)^2$ - 1

Example I

Ethylene and 1-hexene were copolymerized in a continuously operated 5 L liquid-filled CSTR reactor in isobutane at 46 bar (4.6 MPa) in the presence of a silica supported chromium catalyst.

The pore volume of the catalyst was 2.60 cm$^3$/g, the surface area was 600 m$^2$/g and $D_{50}$ was 65 micrometers. The catalyst contained 1.0 wt% of chromium.

This catalyst was activated in a fluid bed in dry air (water content less than 1 ppm) at 700°C for 4 hours. During the activation procedure nitrogen was used instead of air at temperatures lower than 320 °C.

Triethylboron (TEB) was used as a promoter.

Isobutane (2.83 kg/h), ethylene (1.27 kg/h), 1-hexene (32 g/h) and hydrogen (0.38 g/h) were continuously fed to the reactor at 99.5 °C. TEB was also continuously fed to the reactor in such an amount that concentration of boron in the isobutane was 0.12 ppm.

The catalyst feed to the reactor was controlled in order to maintain a constant ethylene concentration in the reactor of 9.1 mol%.

Polyethylene production was 1.05 kg/h.

The catalyst activity was 2950 g of polyethylene per g of catalyst.

After stabilization, the polymer powder was pelletized in a twinscrew extruder.

The polyethylene pellets had the following characteristics:

- density:          949.4 kg/m$^3$
- strain hardening modulus:          30.4 MPa
- high-load melt index:          7.2 g/10 min.
- Impact Izod (-30°C):          15.2 KJ/m2
- die swell 1600 s$^{-1}$:          3.45
- $M_w/M_n$:          15.5

Example II

Ethylene and 1-hexene were copolymerised according to Example I except that the catalyst was activated in a fluid bed in dry air at 650°C for 4 hours.

Isobutane (2.82 kg/h), ethylene (1.27 kg/h), 1-hexene (16 g/h) and hydrogen (0.38 g/h) were continuously fed to the reactor at 101.5 °C. TEB was also continuously fed to the reactor in such an amount that concentration of boron in the isobutane was 0.12 ppm.

The catalyst feed to the reactor was controlled in order to maintain a constant ethylene concentration in the reactor of 9.2 mol%.

Polyethylene production was 1.05 kg/h.

The catalyst activity was 2850 g of polyethylene per g of catalyst.

After stabilization, the polymer powder was pelletized in a twinscrew extruder.

The polyethylene pellets had the following characteristics:

- density: 954.1 kg/m$^3$
- strain hardening modulus: 25.6 MPa
- high-load melt index: 7.3 g/10 min
- Impact Izod (-30°C): 17.0 KJ/m2
- die swell 1600 s$^{-1}$ 3.62
- $M_w/M_n$ : 21.9

The product according to Example I has a high density (high stiffness), high $M_w/M_n$ (broad MWD, excellent processability) and high strain hardening modulus (excellent ESCR).

The product according to Example I has the required impact properties to be applied as the polymer in the production of IBC.

The product according to Example II has a very high density, high $M_w/M_n$ and high strain hardening modulus and results in high stiffness and excellent processability.

The product according to Example II has the required impact properties to be applied as the polymer in the production of IBC.

**Claims**

1. An ethylene copolymer having:

   • a high-load melt index (HLMI) $\geq$ 3 g/10 min and $\leq$ 10 g/10 min (according to ISO 1133)
   • $M_w/M_n \geq$ 14 and $\leq$ 25 (according to size exclusion chromatography (SEC) measurement)
   • a density $\geq$ 945 kg/m$^3$ and $\leq$ 955 kg/m$^3$ (according to ISO 1183) and
   • an Izod impact strength (-30°C) $\geq$ 10 kJ/m$^2$ and $\leq$ 50 kJ/m$^2$ (according to ISO 180/A).

2. An ethylene copolymer according to Claim 1 **characterised in that** theater high-load melt index $\geq$ 4 g/10 min and $\leq$ 9 g/10 min.

3. An ethylene copolymer according to any one of Claims 1-2 **characterised in that** $M_w/M_n \geq$ 15.

4. An ethylene copolymer according to any one of Claims 1-3 **characterised in that** the density $\geq$ 947 kg/m$^3$ and $\leq$ 954 kg/m$^3$

5. An ethylene copolymer according to any one of Claims 1-4 **characterised in that** the strain hardening modulus $\geq$ 20 and $\leq$ 40 (according to the method as described in Elsevier, Polymer 46(2005) 6369-6379) .

6. An ethylene copolymer according to any one of Claims 1-5 **characterised in that** the Izod impact strength (-30°C) $\geq$ 14 kJ/m$^2$

7. An ethylene copolymer according to any one of Claims 1-6 **characterised in that** the die swell at 1600 s$^{-1}$ $\leq$ 5 (according to ISO 11443).

8. A polymerisation process for the preparation of an ethylene polymer according to any one of Claims 1-7 **characterised in that** the polymerisation of ethylene and at least one olefin comonomer having between three and ten carbon atoms per molecule takes place in the presence of a silica-supported chromium-containing catalyst that does not contain titanium and an alkyl boron compound wherein the concentration of boron is less than 0.20 ppm relative to diluent.

9. A polymerisation process according to Claim 8 **characterised in that** the comonomer is 1-hexene.

10. A polymerisation process according to Claim 9 **characterised in that** the alkyl boron compound is triethyl boron.

11. A polymerisation process according to any one of Claims 8-10 **characterised in that** the polymerisation takes place in a slurry loop reactor.

12. A polymerisation process according to any one of Claims 8-11 **characterised in that** the polymerisation takes place by polymerising ethylene and 1-hexene in a slurry loop reactor in the presence of a silica-supported chromium catalyst and triethyl boron wherein the silica-supported chromium-containing catalyst is a silica-supported chromium catalyst having a pore volume larger than 2.0 cm$^3$/g and a specific surface of at least 450 m$^2$/gram and wherein the amount of chromium in the catalyst is at least 0.5 % by weight and wherein the concentration of boron is less than 0.20 ppm.

13. An intermediate bulk container obtained with an ethylene polymer according to any one of Claims 1-7 or obtained with an ethylene polymer produced with the process according to any one of Claims 8-12.

14. A fuel tank obtained with an ethylene polymer according to any one of Claims 1-7 or obtained with an ethylene polymer produced with the process according to any one of Claims 8-12.

**Patentansprüche**

1. Ethylencopolymer mit:

   • einem Hochlast-Schmelzindex (HLMI) $\geq$ 3 g/10 min und $\leq$ 10 g/10 min (gemäß ISO 1133)
   • $M_w/M_n \geq$ 14 und $\leq$ 25 (gemäß Größenausschlußchromatographiemessung (SEC-Messung))
   • einer Dichte $\geq$ 945 kg/m$^3$ und $\leq$ 955 kg/m$^3$ (gemäß ISO 1183) und
   • einer Izod-Schlagzähigkeit (-30°C) $\geq$ 10 kJ/m$^2$ und 50 kJ/m$^2$ (gemäß ISO 180/A).

2. Ethylencopolymer nach Anspruch 1, **dadurch gekennzeichnet, dass** der Hochlast-Schmelzindex (HLMI) $\geq$ 4 g/10 min und $\leq$ 9 g/10 min.

3. Ethylencopolymer nach einem der Ansprüche 1-2, **dadurch gekennzeichnet, dass** $M_w/M_n \geq$ 15.

4. Ethylencopolymer nach einem der Ansprüche 1-3, **dadurch gekennzeichnet, dass** die Dichte $\geq$ 947 kg/m$^3$ und $\leq$ 954 kg/m$^3$.

5. Ethylencopolymer nach einem der Ansprüche 1-4, **dadurch gekennzeichnet, dass** der Verfestigungsmodul $\geq$ 20 und $\leq$ 40 (gemäß der in Elsevier, Polymer 46 (2005) 6369-6379, beschriebenen Methode).

6. Ethylencopolymer nach einem der Ansprüche 1-5, **dadurch gekennzeichnet, dass** die Izod-Schlagzähigkeit (-30°C) $\geq$ 14 kJ/m$^2$.

7. Ethylencopolymer nach einem der Ansprüche 1-6, **dadurch gekennzeichnet, dass** die Strangaufweitung bei 1600 s$^{-1}$ $\leq$ 5 (gemäß ISO 11443).

8. Polymerisationsverfahren zur Herstellung eines Ethylenpolymers nach einem der Ansprüche 1-7, **dadurch gekennzeichnet, dass** die Polymerisation von Ethylen und mindestens einem Olefincomonomer mit zwischen drei und zehn Kohlenstoffatomen pro Molekül in Gegenwart eines siliciumdioxidgetragerten chromhaltigen Katalysators, der kein Titan enthält, und einer Alkylborverbindung erfolgt, wobei die Borkonzentration weniger als 0,20 ppm, bezogen auf Verdünnungsmittel, beträgt.

9. Polymerisationsverfahren nach Anspruch 8, **dadurch gekennzeichnet, dass** es sich bei dem Comonomer um 1-Hexen handelt.

10. Polymerisationsverfahren nach Anspruch 9, **dadurch gekennzeichnet, dass** es sich bei der Alkylborverbindung um Triethylbor handelt.

11. Polymerisationsverfahren nach einem der Ansprüche 8-10, **dadurch gekennzeichnet, dass** die Polymerisation in einem Suspensionsschlaufenreaktor erfolgt.

12. Polymerisationsverfahren nach einem der Ansprüche 8-11, **dadurch gekennzeichnet, dass** die Polymerisation durch Polymerisieren von Ethylen und 1-Hexen in einem Suspensionsschlaufenreaktor in Gegenwart von einem siliciumdioxidgetragerten chromhaltigen Katalysator und Triethylbor erfolgt, wobei es sich bei dem siliciumdioxidgetragerten chromhaltigen Katalysator um einen siliciumdioxidgetragerten Chromkatalysator mit einem Porenvolumen von mehr als 2,0 cm$^3$/g und einer spezifischen Oberfläche von mindestens 450 m$^2$/Gramm handelt und wobei die Chrommenge in dem Katalysator mindestens 0,5 Gew.-% beträgt und wobei die Borkonzentration weniger als 0,20 ppm beträgt.

13. Großpackmittel, erhalten mit einem Ethylenpolymer nach einem der Ansprüche 1-7 oder mit einem nach dem Verfahren nach einem der Ansprüche 8-12 hergestellten Ethylenpolymer.

14. Kraftstofftank, erhalten mit einem Ethylenpolymer nach einem der Ansprüche 1-7 oder mit einem nach dem Verfahren nach einem der Ansprüche 8-12 hergestellten Ethylenpolymer.

**Revendications**

1. Copolymère d'éthylène ayant :

   • un indice de fluidité sous forte charge (IFFC) $\geq$ 3 g/10 min et $\leq$ 10 g/10 min (selon ISO 1133),
   • un rapport $M_w/M_n \geq$ 14 et $\leq$ 25 (selon une mesure par chromatographie d'exclusion stérique (CES)),
   • une densité $\geq$ 945 kg/m$^3$ et $\leq$ 955 kg/m$^3$ (selon ISO 1183), et
   • une résistance au choc Izod (-30 °C) $\geq$ 10 kJ/m$^2$ et $\leq$ 50 kJ/m$^2$ (selon ISO 180/A).

2. Copolymère d'éthylène selon la revendication 1 **caractérisé en ce que** l'indice de fluidité sous forte charge est $\geq$ 4 g/10 min et $\leq$ 9 g/10 min.

3. Copolymère d'éthylène selon l'une quelconque des revendications 1 et 2 **caractérisé en ce que** $M_w/M_n \geq$ 15.

4. Copolymère d'éthylène selon l'une quelconque des revendications 1 à 3 **caractérisé en ce que** la densité est $\geq$ 947 kg/m$^3$ et $\leq$ 954 kg/m$^3$.

5. Copolymère d'éthylène selon l'une quelconque des revendications 1 à 4 **caractérisé en ce que** le mo-

dule d'écrouissage est $\geq 20$ et $\leq 40$ (selon la méthode telle que décrite dans Elsevier, Polymer, 46 (2005), 6369-6379).

6. Copolymère d'éthylène selon l'une quelconque des revendications 1 à 5 **caractérisé en ce que** la résistance au choc Izod (-30 °C) est $\geq 14$ kJ/m$^2$.

7. Copolymère d'éthylène selon l'une quelconque des revendications 1 à 6 **caractérisé en ce que** le gonflement à la filière à 1600 s$^{-1}$ est $\leq 5$ (selon ISO 11443).

8. Procédé de polymérisation pour la préparation d'un polymère d'éthylène selon l'une quelconque des revendications 1 à 7 **caractérisé en ce que** la polymérisation d'éthylène et d'au moins un comonomère oléfinique portant entre trois et dix atomes de carbone par molécule se déroule en présence d'un catalyseur contenant du chrome sur support de silice qui ne contient pas de titane et d'un composé alkylbore dans lequel la concentration de bore est inférieure à 0,20 ppm par rapport au diluant.

9. Procédé de polymérisation selon la revendication 8 **caractérisé en ce que** le comonomère est le 1-hexène.

10. Procédé de polymérisation selon la revendication 9 **caractérisé en ce que** le composé alkylbore est le triéthylbore.

11. Procédé de polymérisation selon l'une quelconque des revendications 8 à 10 **caractérisé en ce que** la polymérisation se déroule dans un réacteur en boucle à combustible en suspension.

12. Procédé de polymérisation selon l'une quelconque des revendications 8 à 11 **caractérisé en ce que** la polymérisation se déroule en polymérisant de l'éthylène et du 1-hexène dans un réacteur en boucle à combustible en suspension en présence d'un catalyseur au chrome sur support de silice et de triéthylbore, dans lequel le catalyseur contenant du chrome sur support de silice est un catalyseur au chrome sur support de silice ayant un volume de pores supérieur à 2,0 cm$^3$/g et une surface spécifique d'au moins 450 m$^2$/gramme, dans lequel la quantité de chrome dans le catalyseur est d'au moins 0,5 % en poids et dans lequel la concentration de bore est inférieure à 0,20 ppm.

13. Grand récipient pour vrac obtenu avec un polymère d'éthylène selon l'une quelconque des revendications 1 à 7 ou obtenu avec un polymère d'éthylène produit par le procédé selon l'une quelconque des revendications 8 à 12.

14. Réservoir de carburant obtenu avec un polymère d'éthylène selon l'une quelconque des revendications 1 à 7 ou obtenu avec un polymère d'éthylène produit par le procédé selon l'une quelconque des revendications 8 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1204523 B
- US 4182810 A
- EP 107127 A
- WO 2005054315 A
- WO 0134661 A

### Non-patent literature cited in the description

- **ANDREW PEACOCK.** Handbook of Polyethylene. Dekker, 2000, 43-66
- Polymer. Elsevier, 2005, vol. 46, 6369-6379
- **KURELEC.** Polymer. Elsevier, 2005, vol. 46, 6369-6379
- **ANDREW PEACOCK.** Handbook of Polyethylene, structure, properties and applications. Dekker, 2000, 242-244